# EUROPEAN PATENT SPECIFICATION

(11) **EP 0 458 842 B1**
(45) Date of publication and mention of the grant of the patent: **12.01.1994**
(21) Application number: 90903310.2
(22) Date of filing: 15.02.1990
(51) Int. Cl.: B01D 53/34

(54) **APPARATUS AND PROCESS FOR THE ELIMINATION OF ATMOSPHERIC POLLUTION**
VORRICHTUNG UND VERFAHREN ZUR BESEITIGUNG DER LUFTVERSCHMUTZUNG
INSTALLATION ET PROCEDE D'ELIMINATION DE LA POLLUTION ATMOSPHERIQUE

(30) Priority: 15.02.1989 CA 591058
(43) Date of publication of application: 04.12.1991
(73) Proprietor: KOTA, George Miklos, Toronto, Ontario M6B 3H2 (CA); KOTA, George A., Toronto, Ontario M6B 3H2 (CA); KOTA, Zsolt, B., Toronto, Ontario M6B 3H2 (CA)
(72) Inventor: KOTA, George Miklos, Toronto, Ontario M6B 3H2 (CA); KOTA, George A., Toronto, Ontario M6B 3H2 (CA); KOTA, Zsolt, B., Toronto, Ontario M6B 3H2 (CA)
(74) Representative: Patentanwälte Zellentin & Partner
(86) International application number: CA9000048
(87) International publication number: WO9009225

(56) References cited:
- EP-A- 101 083
- EP-A- 151 398
- EP-A- 200 588
- EP-A- 211 240
- EP-A- 291 616
- EP-A- 0 089 036
- AT-A- 3 154 431
- DE-A- 3 326 647
- DE-A- 3 511 669
- DE-C- 3 346 865
- GB-A- 2 082 083
- US-A- 3 499 723
- US-A- 3 512 488
- US-A- 3 928 536

## Description

### FIELD OF THE INVENTION

This invention is directed to the elimination of atmospheric pollution by combustion flue gases, and in particular to a process employing mechanical and chemical treatment of the gases, involving a process for restoring and regulating damaged global elemental cycles that have been affected by these gases; and the apparatus for carrying out these processes.

### BACKGROUND TO THE INVENTION

Atmospheric pollution is a world-wide problem which is assuming dramatic proportions on account of the health hazard created by gaseous pollutants, the adverse effect upon plant life from the acid rain that is created, and the much talked-of global greenhouse effect, due to an overall increase in the carbon dioxide content of the atmosphere.

In respect to acid rain and its adverse effect upon soil;
Most soil contains many nutrients. Of these, calcium and magnesium are most important to the nourishment of plant life. The acid from the acid rain combines with these nutrients and leaches them from the soil. As the acidification of the soil continues, the pH level of the soil is decreased. Once it decreases to pH 4, metals such as aluminium (present in large quantities) and cadmium (present in lesser quantities) become toxic. These toxic metals invade the roots of plants, preventing them from extracting moisture from the soil and destroy their defenses against disease. Soil bacteria which recycle plant nutrients and decompose vegetation are also destroyed by these toxic metals. The millions of acres of vegetation that have already been affected will die from lack of nutrition in the near future unless something drastic is done to restore the nutritional balance in damaged soil.

In respect to acid rain and its adverse effect upon water;
Toxic aluminium is washed from the soil by the acid rain into the waters, where it accumulates. This gradually poisons all life in the water as it does in soil, as well as all life that is dependent on the water for a water supply.

In respect to the greenhouse effect and its adverse effect upon life;
It is a commonly publicized threat that the ongoing global warming of the planet will cause the melting of the ice caps of our north and south poles, resulting in an unreasonable increase in sea level. A less widely publicized but more concerning threat that we are facing is that the concentration of carbon dioxide is dangerously increasing in our atmosphere. Experiments have shown that concentrations over 1% begin to be toxic for laboratory animals as well as human beings. The increase in carbon dioxide causes a relative decrease in oxygen (O₂), which also results in a relative decrease in atmospheric ozone.

In respect to the destruction of our oxygen sources;
Our two main sources of oxygen are plants and algae, which use photosynthesis to convert carbon dioxide into organic molecules, releasing oxygen.

Plants are destroyed by acid rain and the killing of rain forests. Algae are destroyed through the continuous dumping of toxic waste into our waters as well as by acid rain.

Great efforts have been expended, in order to solve the acid rain problem. There are approximately a dozen different types of scrubbers in use today in smelters and power stations. These scrubbers are only 90 - 98 % effective in SO₂ removal, merely slowing down the destructive processes that are destroying our environment, having no positive or mending effect upon the damage that has already been done. The industrialization of our society poisoned our environment by continuously releasing dangerous chemicals into the air. Through the air, these chemicals spread like a disease, slowly at first, affecting the environment (water, soil, air, etc.). With our global elemental cycle thus damaged, all organic life dependent on this cycle is being dangerously affected. The only way to cure this disease is through the air, because this is the way by which it was induced. We must administer the cure in this manner because it is the only method by which we can reach all the affected parts of the environment.

### SUMMARY OF THE INVENTION

The present invention provides an improved process for treating flue gas (Claim 1) and an apparatus for carrying out this process (Claim 3). The parts of the apparatus in combination with the relevant steps of the process carried out in said parts are summarized below.

An extraction apparatus can be readily installed and used in conjunction with the operation of existing smelters, power stations, and incinerators of all conventional designs and configurations, to promote a process, wherein liquid scrubbing of flue gases utilizes added alkali and/or alkali salts, and water vapour already present in the flue gases as two of the primary scrubbing agents.

In a preferred embodiment the apparatus is provided with a corrosion resistant inner wall, in view of the corrosive, generally acidic nature of the thus formed mixture product. The inner wall may form part of a water cooled jacket bounding the flow path of the flue gases. The surface area of the inner wall may form a profiled section comprising a series of joined, curved surfaces, to provide an extended accessible mixture collection surface area thereto.

Mixing of the condensation droplets the alkali and/or alkali salts, and the flue gas may be promoted by a series of nozzles through which air, steam, or a mixture thereof may be discharged to promote an intimate mixing relation between condensation products and the flue gas, with absorption of contaminant elements therein. The use of pressurized air or steam with injections of high concentrations of alkali and/or alkali salts can increase the total solubility of SO₂, SO₃, and NO_{X} gases to the condensate droplets to form a mixture product.

Collection of this mixture product takes place within the concave, curved surfaces of the inner wall of the chamber, and draining, via pipes at the bottom of the above mentioned surfaces.

Thus, the present invention provides a contaminant extraction apparatus in use to receive hot , contaminating flue gases from a combustor; the apparatus comprising:
a gas contaminant extraction chamber, for passage of the flue gases therethrough;
condensing means by an outer sleeve of coolant;
mixing means within the chamber to intimately mix products of condensation with the flue gases;
mixture collection means; and,
drain means for draining mixture collected within the chamber.

Initial condensation of a portion of the flue gas volatiles, primarily water vapour, together with intimate mixing of alkali and/or alkali salts and the condensate in droplet form with the balance of the flue gas can result in the bonding of a significant quantity of flue gas pollutants to the condensate droplets, all of the above occuring simultaneously.

Collection of thus formed mixture product upon an extended deposition area permits drainage and removal of the mixture product, for disposal thereof. The relatively concentrated mixture product facilitates subsequent treatment and handling, as it includes a major portion of the oxides of sulphur and nitrogen present in the flue gas.

The amount of moisture contained in coal generally exceeds that which is necessary for the bonding of contaminants in flue gases, and when burning oil as fuel, the created moisture content is approximately 11%, which is also sufficient for the bonding of contaminants in such gases.

Thus, there is provided a process, utilizing our flue gas contaminant extraction apparatus, for modifying hot flue gas emitted from a combustion process comprising the steps of:
mixing the flue gas intimately inducing at least partial condensation, with generation of condensate therein;
simultaneously mixing the flue gas intimately with condensate and alkali and/or alkali salts to promote absorption of at least some portion of the noxious contents of the gas by the condensate, to form a mixture product;
collection of the mixture product in the concave, curved surfaces of the inside wall of the extraction chamber surrounding the flue gas flow path; and,
removing the collected product from the residual flue gas stream.

The residual flue gases, at least partially cleaned by the (series of) contaminant extraction chamber(s) continue to flow downstream towards the chimney inlet. These gases may be reheated at this stage, if necessary.

The invention further includes the mixing of a chemically active agent with the flue gas, to react with acidic elements of the residual gas. The chemically active agent is preferably sprayed, by way of a hot liquid solution into the residual flue gas. The use of a basic material such as calcium compound, in the form of a limewash is preferred. In the case of a combustion process employing a chimney for discharge of the flue gases, spraying of the limewash is proposed adjacent the chimney outlet.

This chemical treatment of the residual flue gas, as by the injection of a base material in hot liquid form may include a series of fluid injection nozzles, preferably located adjacent the point of exit of the residual flue gases to atmosphere, to inject material such as a suitable concentration of limewash in reacting relation into the residual flue gas stream. The temperature of this injected material must be below the boiling point. Use of a pH meter and SO₂ monitoring device, located downstream of the mixture extraction apparatus portion of the process permits determination of the quantity of limewash to be administered to the residual flue gases.

Thus, the present invention provides an apparatus in use to mix various desired substances with the flue stack gases, at the chimney orifice; apparatus comprising:
storage means for desired substances;
delivery means for desired substances to be carried to the chimney orifice; and,
spraying means for desired substances to mix with exiting flue stack gases.

The purpose of the above apparatus is to promote a process, to modify hot flue gas from a combustion process at the point of departure from the stack orifice; comprising the steps of:
mixing various desired substances with the outflow of flue gases (substances optimally may include limewash, pressurized air, steam or any combinations thereof), to at least partially neutralize acid-forming contaminants; and,
emitting of thus formed product into the atmosphere.

One effect of the present flue gas treatment process is to change the mass of the flue gases leaving the stack, which may change the downstream pattern of deposition on the ground. Increasing the energy of the flue gases, by reheat or by kinetic energy increase may serve to compensate for this effect. Where the deposition of flue gas precipitates is intended to rectify or partially redress previous damage to the ecology by fossil combustion gas contaminants, the flue gas deposition pattern may be of importance for such purposes. Particular air born additives, such as magnesia milk, and other nutrients may be added for purposes of eco-restructuring.

It is contemplated that the down-wind area of beneficial fallout may be extended or supplemented by auxiliary, transportable chimneys, using air and/or steam as the carrier for an appropriate treatment agent. Such chimneys, supported by a structure, are solely for the purpose of dispersing an ecologically beneficial chemical agent into the atmosphere.

### BRIEF DESCRIPTION OF THE DRAWINGS

Certain embodiments of the invention are described, by way of example and without limitation of the invention thereto, reference being made to the accompanying drawings, wherein:
Figure 1 is a schematic view, in elevation of a power station incorporating certain embodiments of the present invention;
Figure 2 is an enlarged view of a portion of Figure 1;
Figure 3 is a schematic view in elevation, of an exhaust stack incorporating other embodiments of the invention; and,
Figure 4 is an enlargement of a portion of Figure 3.

### DETAILED DESCRIPTION OF THE INVENTION

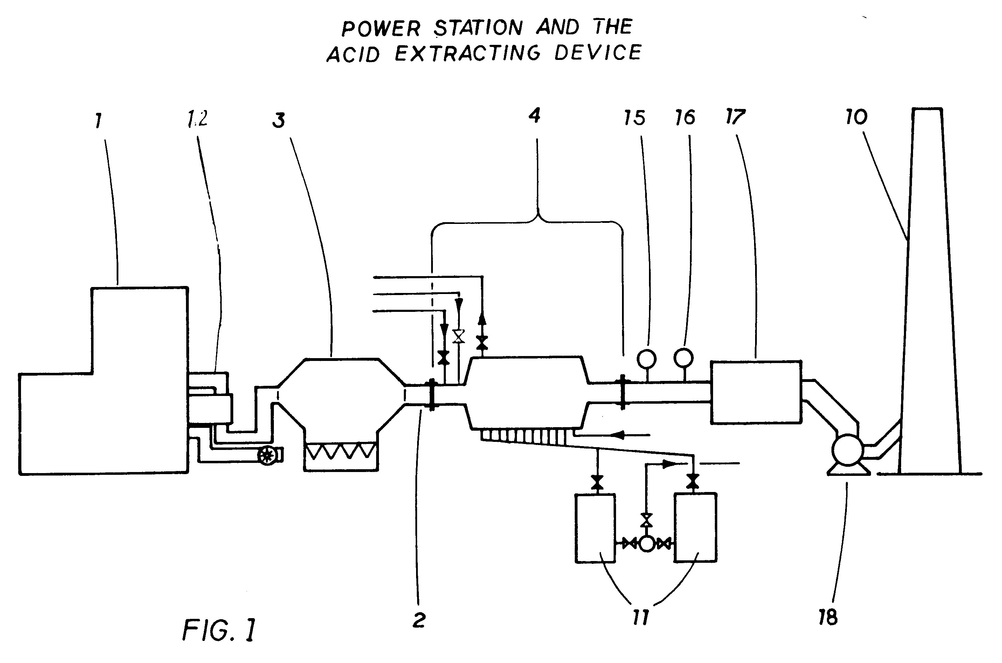

Referring to Figure 1, a power house 1 connects by way of a flue gas exhaust duct 1.2 with an electrostatic precipitator 3. The flue gas outlet 2 connects with contaminant extraction chamber 4, of the present invention. The gas outlet of chamber 4 connects with a reheat chamber 17, and from there, by way of exhaust fan 18, with the flue gas discharge stack 10. Collecting tanks 11 are connected with the extraction chamber 4.

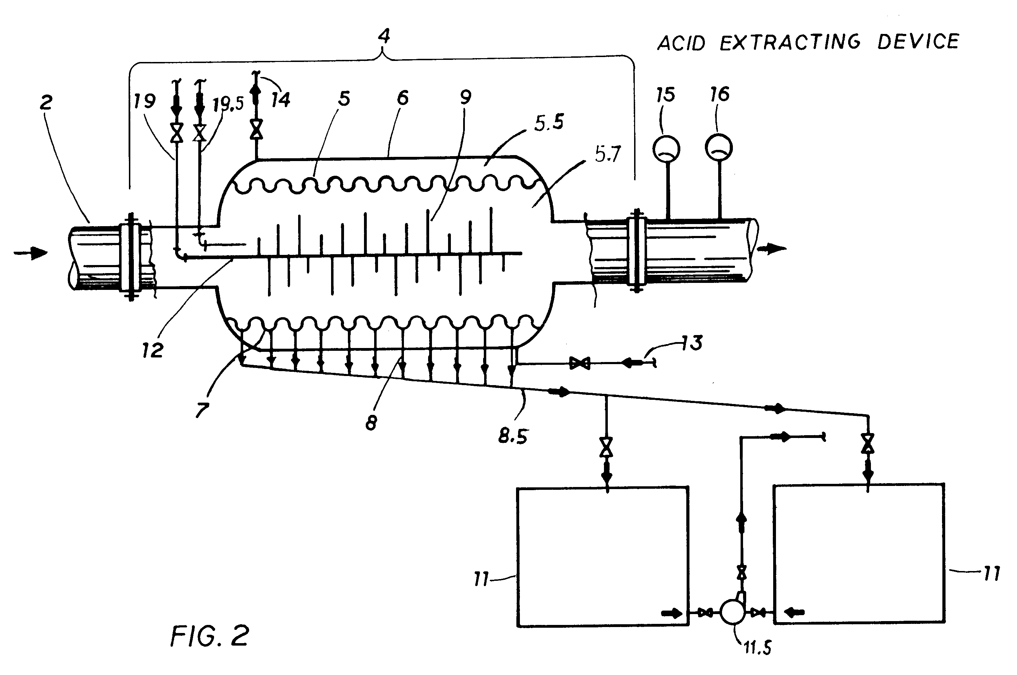

A pH meter 15 and SO₂ monitoring device 16 are connected with the flue gas outlet of chamber 4. Referring in greater detail to Figure 2, the chamber 4 has a corrugated inner surface 5 and an outer wall 6, forming an annular container therebetween, serving as a cooling jacket. A water supply pipe 13 and water return pipe 14 provide cooling water to the annular cooling jacket 5.5. Within the interior 5.7 of the chamber 4 the lower concave portions 7 of the corrugations connect by way of a series of drain pipes 8 and collector 8.5 with the tanks 11.

A large diameter tube 12, illustrated as extending coaxially of the chamber 4 has an array of jet pipes 9 extending outwardly therefrom, in circular and axially spaced relation along the length of tube 12. A supply pipe 19 connects with an air and/or steam supply (not shown). A supply pipe 19.5 connects with an alkali and/or alkali salt supply (not shown).

In operation, flue gas exhaust formed by combustion of fossil fuels such as coal, oil, natural gas or other combustants passes by way of duct 1.2 to the electrostatic precipitator 3, where fine dust and other combustion particulates are extracted from the hot flue gas. The hot flue gas then passes by way of outlet 2, to the extraction chamber 4. The inner wall 5 of the chamber 4 is cooled by passage of cooling water within the space 5.5, in counter-flow relation to the direction of passage of flue gas within the interior space 5.7.

A regulated supply of air and/or steam, by way of supply pipe 19 is sprayed through jets into the chamber, to promote droplet formation and widespread turbulent mixing throughout the chamber 4, in cooperation with the corrugated inner surface 5 of the chamber 4. A regulated supply of alkali and/or alkali salts by way of supply pipe 19.5 are sprayed into the chamber 4 in reacting relation to the contaminants of the flue gas, to aid their solubility.

The cooled inner surface 5 constitutes an extended area collection surface on which the mixed liquid collects. The corrugated surfaces 7 guides the collected mixture to drain pipes 8, and thence, by way of collector 8.5, to the tanks 11. The accumulated mixture may be dumped at will from the tanks 11, by way of pump 11.5, to disposal.

To determine the size and exact form of the corrugations of the inner cooling surface 5 of the extraction chamber 4 the boiling point of the water must be considered. The objective is such that the precipitated mixture must not evaporate, but cool down, and run along the cooled inner surface 5 to the lower concave portions 7 of the corrugations into the collector tank 11, by way of a series of drain pipes 8 and a collector pipe 8.5.

The partially purified, residual flue gases may have their energy level restored by the application of heat, in reheat chamber 17, and/or by increase in kinetic energy, by way of exhaust fan 18.

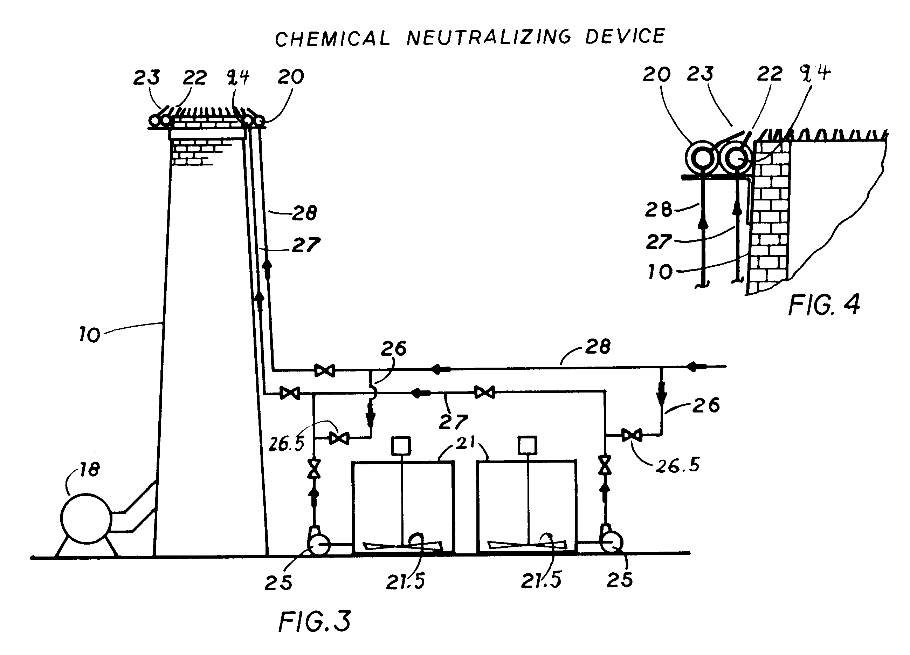

Referring to Figure 3, the chemical treatment portion of the process comprises a limewash supply, where mixing tanks 21 are equipped with mechanical agitators 21.5 and delivery pumps 25.

The outlet of stack 10 (see also Figure 4) has annular arrays of nozzles 22, 23 connecting respectively with ring ducts 24,20. Pipeline 27 connects ring duct 24 with delivery pumps 25 of the limewash supply system. Pipe line 28, connecting with ring duct 20, connects to a steam supply (not shown). Steam by-pass lines 26, connecting by way of shut-off valves 26.5, permit the blowing through of the limewash system. While the respective pipes and nozzles are illustrated as being located externally of the stack 10, it will be understood that to meet certain climatic requirements it may be preferred to locate the pipes internally of the stack 10.

In addition to the use of steam, to assist in spraying (or vapourizing) the limewash, compressed air may also be used from a suitable supply, instead of, or in conjunction with the steam. In the case that both are needed, another pipe line, ring duct, delivery pumps, and annular array of nozzles may be used (not shown).

Desired temperatures for all substances and apparatus must be insured and maintained at all stages of the invention by whatever means necessary, to achieve maximal operational efficiency and desired result.

The following chemical reactions take place throughout the invention:

SO₂ + H₂O ⇄ H₂SO₃

H₂SO₃ + Ca(OH)₂ → CaSO₃ + 2H₂O

CaSO₃ + H₂SO₃ → Ca(HSO₃)₂

Ca(HSO₃)₂ + Ca(OH)₂ → 2CaSO₃ + 2H₂O

CaSO₃ + ½O₂ → CaSO₄

SO₃ + H₂O → H₂SO₄

H₂SO₄ + Ca(OH)₂ → CaSO₄ + 2H₂O

CO₂ + Ca(OH)₂ ― CaCO₃ + H₂O

CaCO₃ + CO₂ + H₂O ― Ca(HCO₃)₂

CaCO₃ + SO₂ ― CaSO₃ + CO₂

Ca(HCO₃)₂ + SO₂ ― CaSO₃ + 2H₂O + 2CO₂

3NO₂ + H₂O ― 2HNO₃ + NO

2HNO₃ + 3H₂SO₃ ― 3H₂SO₄ + 2NO + 2H₂O

H₂SO₄ + Ca(OH)₂ ― CaSO₄ + 2H₂O

It will be understood that the effectiveness of the limewash portion of the process is dependent upon the quantity and concentration of Ca(OH)₂ solution injected into the residual flue gases. Injection of the limewash at a point adjacent the stack outlet permits the subsequently formed calcium salts to be dispersed over the area, to have a regenerative effect on previously contaminated terrain. The combined processes tend to neutralize the sulphur and nitrous gases of the exhaust emissions. The extent of carbon dioxide neutralization will depend on the balance of limewash provided in the chemical part of the process.

The dispersion rate of the limewash at the stack's orifice is directly proportional to and may be automatically controlled by the load applied to the boiler as well as the velocity of the prevailing winds. The dispersed limewash mixes with the waste gases and substantially neutralizes the residual sulphurous and nitrogen dioxide compounds , as well as a portion of the CO₂ gases.

## Claims

1. A process for neutralizing contaminating gas molecules in hot flue gas emitted from a combustion process in three consecutive steps, firstly after leaving the combustor, secondly at the point of emission from the chimney orifice into the atmosphere, and thirdly, downwind from the beneficial fallout deposition area of the particulate by-product of the previous step, comprising
reducing the temperature and mixing of said flue gas, to create at least partial condensation with generation of condensate therein, while simultaneously mixing said flue gas intimately with said condensate, alkali and/or alkali salts, to promote absorption of at least some portion of noxious contents of gas by said condensate to form a mixture product, collecting said product, and removing it from the flue gas stream, all of this taking place upon departure of the gas from the combustor,
spraying a chemically active agent being selected from the group comprising calcium hydroxide, magnesium hydroxide, and mixtures thereof, into said flue gas outflow at the point of emission from the chimney orifice to react with contaminants therein, and
dispersing said ecologically beneficial, chemically active agent(s) by the aid of steam and/or pressurized air jets into the residual flue gases downwind from the beneficial fallout deposition area of the particulate by-product of the previous step.

2. The process as set forth in claim 1, wherein said mixing step, spraying step, and dispersing step comprises displacing said gas by injecting steam and/or pressurized air to generate turbulence.

3. A contaminant neutralizing apparatus, interacting with a combustion plant generating hot, contaminating flue gases, said apparatus being located to treat the flue gases according to the process claimed in claims 1-2, in three consecutive steps, firstly after leaving the combustor, secondly at the point of emission from the chimney orifice into the atmosphere, and thirdly, down-wind from the beneficial fallout deposition area of the particulate by-product of the previous step, said apparatus comprising
an acid extracting device containing a high-turbulence condensing chamber (4) having the ability to receive hot flue gases from a combustor for passage therethrough, where said high-turbulence condensing chamber (4) comprises condensing means, turbulence generating means, collection means, and draining means, wherein said turbulence generating means comprises a pressure fluid supply pipe (12) extending longitudinally of said high-turbulence condensing chamber (4) in substantially aligned relation with the axis of flow of said gases therethrough, the pressure fluid supply pipe (12) having a plurality of branch pipes (9) in mutually spaced relation extending outwardly therefrom, in use to provide a plurality of turbulence-generating jets within the chamber (4), and wherein said collection means comprises a unique, corrosion ressistant, corrugated inner wall (5) of profiled section, to provide an extended, accessible collection surface area, the gas outlet of said acid extracting device communicating with the chimney inlet,
an annular array of liquid spraying nozzles (22) adjacent the chimney outlet, having the ability to influence a portion of the outflow of flue gas that eluded effective influence in the first step, said nozzles (22) being connected to fluid supply means via a set of pipes (27) extending downward, parallel with the chimney (10), a further annular array of fluid dispersion nozzles (23) adjacent the chimney outlet and connected via a set of pipes (28) extending downwards, parallel with the chimney (10) to a steam or a pressurized air supply,
an auxiliary chimney supported by an elevated structure, the orifice of which is equipped with two annular arrays of nozzles same as the ones provided in the previous chimney, with the ability to further influence flue gas that eluded effective influence in the previous two steps.

4. A contaminant neutralizing apparatus as set forth in claim 3, said fluid supply means comprising an alkali supply.

5. A contaminant neutralizing apparatus as set forth in claim 4, said fluid supply means also comprising a steam supply or a pressurized air supply including combinations of both.

## Patentansprüche

1. Verfahren zum Neutralisieren von kontaminierenden Gasmolekülen in bei einem Verbrennungsvorgang freigesetztem heißem Abgas in drei aufeinanderfolgenden Schritten, erstens nach Verlassen der Verbrennungskammer, zweitens an der Austrittsstelle von der Kaminauslaßöffnung in die Atmosphäre, und drittens auf der dem Wind abgekehrten Seite des Ablagerungsgebiets des nützlichen Fallouts des aus Partikeln bestehenden Nebenprodukts des vorhergehenden Schrittes, umfassend:
Reduzieren der Temperatur und Mischen des Abgases, um eine zumindest teilweise Kondensation mit Erzeugung eines Kondensats zu schaffen, während gleichzeitig das Abgas mit dem Kondensat, Alkali und/oder Alkalisalzen innig gemischt wird, um die Absorption von zumindest einem Teil schädlicher Bestandteile des Gases durch das Kondensat zu beschleunigen, so daß ein Mischungsprodukt gebildet wird, Sammeln des Produktes und Entfernen des Produktes aus dem Abgasstrom, wobei all dies nach dem Verlassen des Gases aus der Verbrennungskammer stattfindet,
Sprühen eines chemisch aktiven Mittels, das aus der Calciumhydroxid, Magnesiumhydroxid und Mischungen davon enthaltenden Gruppe ausgewählt ist, in den Abgasabstrom an der Austrittsstelle aus der Kaminauslaßöffnung, so daß es mit darin enthaltenen Verunreinigungen reagiert, und
Dispergieren des/der ökologisch nützlichen, chemisch aktiven Mittels/Mittel mit Hilfe von Dampf und/oder Druckluftdüsen in die restlichen Abgase auf der dem Wind abgekehrten Seite des Ablagerungsgebiets des nützlichen Fallouts des aus Partikeln bestehenden Nebenprodukts des vorhergehenden Schrittes.

2. Verfahren nach Anspruch 1, dadurch gekennzeichnet, daß der Mischschritt, der Sprühschritt und der Dispergierschritt das Bewegen des Gases durch Einspritzen von Dampf und/oder Druckluft enthält, um Turbulenz zu erzeugen.

3. Vorrichtung zum Neutralisieren von Verunreinigungen, die mit einer Verbrennungsanlage, die heiße verunreinigende Abgase erzeugt, in Wechselwirkung steht, wobei die Vorrichtung angeordnet ist, um die Abgase gemäß dem Verfahren nach den Ansprüchen 1 und 2 in drei aufeinanderfolgenden Schritten zu behandeln, erstens nach Verlassen der Verbrennungskammer, zweitens an der Austrittsstelle aus der Kaminauslaßöffnung in die Atmosphäre, und drittens auf der dem Wind abgekehrten Seite des Ablagerungsgebiets des nützlichen Fallouts des aus Partikeln bestehenden Nebenprodukts des vorhergehenden Schrittes, wobei die Vorrichtung umfaßt:
eine säureextrahierende Einrichtung, die eine Hochturbulenz-Kondensationskammer (4) enthält, die heiße Abgase von einer Verbrennungsanlage zur Durchleitung dort hindurch aufnehmen kann, wobei die Hochturbulenz-Kondensationskammer (4) ein Kondensationsmittel, ein turbulenzerzeugendes Mittel, ein Sammelmittel und ein Ablaufmittel enthält, worin das turbulenzerzeugende Mittel eine Druckfluidversorgungsleitung (12) enthält, die sich in Längsrichtung der Hochturbulenz-Kondensationskammer (4) in im wesentlichen ausgerichteter Beziehung zur Achse der Strömung des Gases dort hindurch erstreckt, wobei die Druckfluidversorgungsleitung (12) eine Vielzahl von Zweigröhren (9) in gegenseitig beabstandeter Beziehung aufweist, die sich von dort nach außen erstrecken und die zum Schaffen einer Vielzahl von turbulenzerzeugenden Düsen innerhalb der Kammer (4) in Gebrauch sind, und worin das Sammelmittel eine einmalige, korrosionsbeständige, gewellte innere Wand (5) eines Profilteils aufweist, um einen ausgedehnten, zugänglichen Sammeloberflächenbereich zu schaffen, wobei der Gasauslaß der säureextrahierenden Einrichtung mit dem Kamineinlaß in Verbindung steht,
eine ringförmige Anordnung von flüssigkeitssprühenden Düsen (22) neben dem Kaminauslaß, die einen Teil des Abgasabflusses, der einer wirksamen Beeinflussung in dem ersten Schritt entgangen ist, beeinflussen können, wobei die Düsen (22) mit einem Fluidversorgungsmittel über eine Anzahl von Röhren (27) verbunden sind, die sich abwärts parallel zu dem Kamin (10) erstrecken, eine weitere ringförmige Anordnung von fluidverteilenden Düsen (23), die neben dem Kaminauslaß angeordnet sind und über eine Anzahl von Röhren (28) verbunden sind, die sich abwärts parallel zum Kamin (10) zu einer Dampf- oder einer Druckluftversorgung erstrecken,
einen Hilfskamin, der von einer erhöhten Struktur getragen wird, dessen Auslaßöffnung mit zwei ringförmigen Anordnungen von Düsen versehen ist, die die gleichen sind, wie jene des vorherigen Kamins, und die Abgas, das einer wirksamen Beeinflussung in den vorhergehenden zwei Schritten entgangen ist, weiter beeinflussen können.

4. Vorrichtung zur Neutralisierung von Verunreinigungen nach Anspruch 3, dadurch gekennzeichnet,
daß das Fluidversorgungsmittel eine Alkaliversorgung enthält.

5. Vorrichtung zur Neutralisierung von Verunreinigungen nach Anspruch 4, dadurch gekennzeichnet,
daß das Fluidversorgungsmittel auch eine Dampfversorgung oder eine Druckluftversorgung einschließlich einer Kombination von beiden enthält.

## Revendications

1. Procédé de neutralisation de molécules de gaz contaminants dans des gaz de combustion chauds émis à partir d'un procédé de combustion, en trois étapes consécutives, premièrement après leur sortie du brûleur, deuxièmement au point d'émission à partir de l'orifice d'échappement de la cheminée dans l'atmosphère, et troisièmement à vent arrière à partir de la zone de retombée du sous-produit particulaire utile de l'étape précédente, ledit procédé comportant les opérations suivantes :
- diminution de la température et mélange dudit gaz de combustion, pour créer au moins une condensation partielle avec génération de condensat en son sein, mélange simultané dudit gaz de combustion intimement avec ledit condensat, un alcali et/ou des sels alcalins, pour favoriser l'absorption d'au moins d'une partie des produits nocifs du gaz par ledit condensat pour former un produit de mélange, récupération dudit produit et séparation de celui-ci du courant de gaz de combustion, tout ceci ayant lieu lors de la sortie du gaz du brûleur ;
- pulvérisation d'un agent chimiquement actif sélectionné dans le groupe comprenant l'hydroxyde de calcium, l'hydroxyde de magnésium et leurs mélanges, dans ledit échappement de gaz de combustion au point d'émission à partir de l'orifice d'échappement de la cheminée pour réagir avec les contaminants qui sont présents, et
- dispersion dudit ou desdits agent(s) chimiquement actif(s) écologiquement utile(s) à l'aide de jets de vapeur d'eau et/ou d'air sous pression dans les gaz de combustion résiduels, à vent arrière, à partir de la zone de retombée du sous-produit particulaire utile de l'étape précédente.

2. Procédé selon la revendication 1, caractérisé en ce que lesdites étapes de mélange, de pulvérisation et de dispersion comprennent le déplacement dudit gaz en injectant de la vapeur d'eau et/ou de l'air sous pression pour créer une turbulence.

3. Appareil de neutralisation de contaminants, interagissant avec une installation de combustion produisant des gaz de combustion chauds contaminants, ledit appareil étant localisé de manière à traiter les gaz de combustion selon le procédé objet des revendications 1 et 2, en trois étapes consécutives, premièrement après leur sortie du brûleur, deuxièmement au point d'émission dans l'atmosphère à partir de l'orifice de la cheminée, et troisièmement, à vent arrière, à partir de la zone de retombée du sous-produit particulaire utile de l'étape précédente, ledit appareil comprenant
- un dispositif d'extraction d'acides contenant une chambre (4) de condensation à haute turbulence apte à recevoir, à partir du brûleur, les gaz de combustion chauds et à être traversée par eux, ladite chambre (4) de condensation à haute turbulence comprenant des moyens de condensation, des moyens de génération de turbulences, des moyens de collecte et des moyens d'évacuation, où les moyens de génération de turbulences comportent un conduit (12) d'alimentation de fluide sous pression s'étendant longitudinalement par rapport à la chambre (4) de condensation à haute turbulence de manière à ce qu'il soit sensiblement aligné avec l'axe d'écoulement desdits gaz traversants, le tuyau (12) d'alimentation de fluide sous pression ayant plusieurs dérivations (9) espacées les unes des autres et s'étendant vers l'extérieur, lesdites dérivations (9) étant utilisées pour former une pluralité de jets de génération de turbulence dans la chambre (4), et lesdits moyens de collecte comprennent une seule paroi (5) intérieure ondulée, résistant à la corrosion et de section profilée, pour fournir une surface de collecte accessible et étendue, la sortie de gaz dudit dispositif d'extraction d'acides communicant avec l'orifice d'entrée de la cheminée;
- un arrangement annulaire de buses (22) de pulvérisation de liquide, adjacentes à la sortie de cheminée, pouvant agir sur une partie de l'écoulement des gaz qui n'ont pas été effectivement influencés dans la première étape, lesdites buses (22) étant reliées à des moyens d'alimentation de fluide par un jeu de tuyaux (27) s'étendant vers le bas, parallèles à la cheminée, un autre arrangement annulaire de buses (23) de dispersion de fluide, adjacentes à la sortie de cheminée et reliées par un jeu de tuyaux (28) s'étendant vers le bas, parallèles à la cheminée (10) à une alimentation d'air sous pression ou de vapeur d'eau ;
- une cheminée auxiliaire soutenue par une structure élevée, dont l'orifice d'échappement est pourvu de deux arrangements annulaires de buses identiques à celles prévues pour la cheminée précédente, pouvant agir de manière supplémentaire sur les gaz de combustion qui n'ont pas été effectivement influencés dans les deux étapes précédentes.

4. Appareille de neutralisation de contaminants selon la revendication 3, dans lequel lesdits moyens formant conduit d'alimentation de fluide comprennent une alimentation d'alcali.

5. Appareille de neutralisation de contaminants selon la revendication 4, dans lequel lesdits moyens formant conduit d'alimentation de fluide comprennent en outre une alimentation de vapeur ou une alimentation d'air sous pression y compris une combinaison de deux.
